# EUROPEAN PATENT SPECIFICATION

(11) **EP 4 282 254 B1**
(45) Date of publication and mention of the grant of the patent: **23.04.2025**
(21) Application number: 23175069.6
(22) Date of filing: 24.05.2023
(51) Int. Cl.: A01F 25/13, A01F 25/16

(54) **DEVICE FOR ARRANGING AND REMOVING A STRIP OF COVERING MATERIAL, SUCH AS FILM OR CLOTH, ON A TRENCH SILO**
VORRICHTUNG ZUM ANORDNEN UND ABNEHMEN EINES STREIFENS ABDECKMATERIALS, WIE FOLIE ODER STOFF, AUF EINEM GRABENSILO
DISPOSITIF POUR DISPOSER ET ENLEVER UNE BANDE DE MATÉRIAU DE COUVERTURE, TEL QU'UN FILM OU UN TISSU, SUR UN SILO EN TRANCHÉE

(30) Priority: 24.05.2022 NL 2031976
(43) Date of publication of application: 29.11.2023
(73) Proprietor: Easy Silage Holding B.V., 8651 CW Ijlst (NL)
(72) Inventor: Groenveld, Peter, 8647 SG Sibrandabuorren (NL)
(74) Representative: 't Jong, Bastiaan Jacob

(56) References cited:
- EP-A1- 3 476 204
- EP-A1- 3 967 131
- DE-A1- 10 058 493
- NL-B1- 2 027 308

## Description

The invention relates to a device for arranging and removing a strip of covering material, such as film or cloth, on a trench silo, which device comprises:
- a mobile gantry with means for holding a roller with covering material and at least one motor for driving the mobile gantry in order to move the gantry along the trench silo. Such a device is known, for instance, from NL 2027308B1.

Such a mobile gantry is for instance known from EP 3476204. This mobile gantry is provided with hydraulically driven wheels, whereby the gantry can be displaced over a trench silo in longitudinal direction. All wheels can further rotate around a vertical axis, so that the gantry can also be displaced in transverse direction relative to a trench silo. This makes it possible to use the mobile gantry for two or more parallel trench silos.

The displacement of such a gantry from the one trench silo to the next takes a lot of time because a roller with covering material must first be uncoupled, the gantry must then be moved to a position beyond the trench silo, only after which it can be displaced in transverse direction to a subsequent trench silo. The gantry must here once again be moved over the trench silo and another roller with covering material must be coupled to it.

The application of two of such mobile gantries doubles the costs, while such a gantry is not in use for a large part of the time.

EP 3476204 now proposes to obtain the hydraulics for the drive of the mobile gantry from an external system, which will reduce the costs for such a gantry. An obvious external system is an agricultural tractor, which is used as energy source for diverse systems. An agricultural tractor is usually however unable to travel between two trench silos, which would necessitate the use of very long hydraulic hoses. Such hoses are heavy because they typically are and remain filled with hydraulic fluid, and are consequently very difficult to handle.

It is therefore an object of the invention to reduce or even obviate the above stated drawbacks.

This object is achieved according to the invention with a device according to the preamble, which is characterized by
- a carriage arranged on the mobile gantry with a mechanical coupling;
- an energy source, such as a generator, battery or hydraulic pump, arranged on the carriage; and
- a rapid coupling for coupling the energy source to the at least one motor.

The carriage with the energy source arranged thereon can be uncoupled from the mobile gantry in simple manner using the mechanical coupling and the energy source can be uncoupled from the at least one motor by means of the rapid coupling. The carriage with the energy source thereon can then be displaced to a subsequent mobile gantry and there once again be coupled to the gantry with the mechanical coupling and the rapid coupling.

With the device according to the invention only one carriage with energy source is thus required in order to supply energy to one or more mobile gantries. It is hereby not necessary to displace the voluminous gantry or to uncouple and couple rollers with covering material when feed must for instance be removed from a subsequent trench silo. Only the carriage with just the energy source need be displaced, after which operations can be resumed.

In a further embodiment of the device according to the invention the rapid coupling comprises a first coupling part arranged on the mobile gantry and a second coupling part arranged on the carriage.

In a preferred embodiment of the device according to the invention one of the first coupling part and the second coupling part has at least one male connector and the other of the first coupling part and the second coupling part has a corresponding number of female connectors.

The use of male connectors and female connectors guarantees that the correct connections are formed when the carriage is coupled to the gantry. In the case of an electric rapid coupling it is for instance possible to envisage a plug and socket connection, in which diverse poles are arranged for transmitting electrical energy from the energy source to the at least one motor.

In a further preferred embodiment of the device according to the invention the first coupling part and the second coupling part comprise hydraulic rapid couplings.

A hydraulic rapid coupling is generally known and allows a hydraulic connection between a hydraulic energy source and a hydraulic motor to be brought about in simple manner.

In another preferred embodiment of the device according to the invention the mechanical coupling comprises at least one upright edge, arranged on the mobile gantry, and a hook part, arranged on the carriage, engaging therearound.

In such an embodiment the carriage can in fact be hooked onto the mobile gantry, whereby the carriage is automatically pulled along when the gantry is moved.

A further embodiment of the device according to the invention further comprises lifting means for lifting at least a part of the carriage relative to the mobile gantry.

By lifting at least a part of the carriage relative to the mobile gantry the carriage will no longer rest on the ground, whereby it will not affect the movement, particularly steering movements, of the mobile gantry.

The lifting means preferably comprise an actuator, such as a hydraulic cylinder, which actuator is arranged between the mechanical coupling and the carriage.

The actuator makes it possible to lift or lower the carriage in simple manner. In combination with the mechanical hook part coupling, the carriage can thereby also be hooked on in simple manner.

These and other features of the invention are further elucidated with reference to the accompanying drawings.
Figure 1 shows a perspective view of two trench silos, each with a device according to the invention.
Figures 2A and 2B show a side view of a part of the device according to the invention in two different positions.
Figure 3 shows a perspective view of a rapid coupling for the device according to the invention.

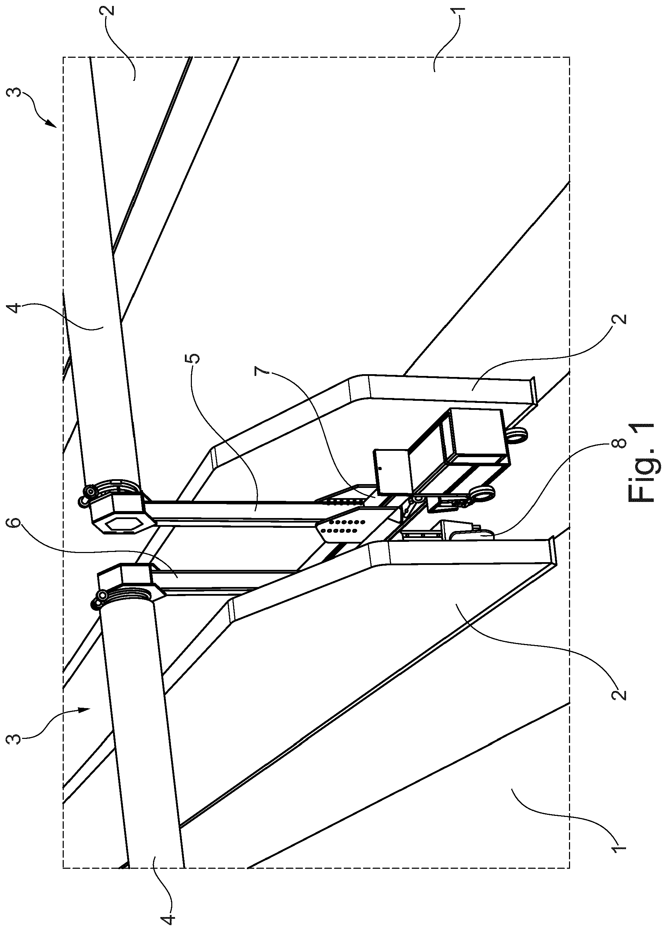

Figure 1 shows two trench silos formed by a bottom 1 and upright walls 2. A device 3 according to the invention is positioned over each of the trench silos 1, 2.

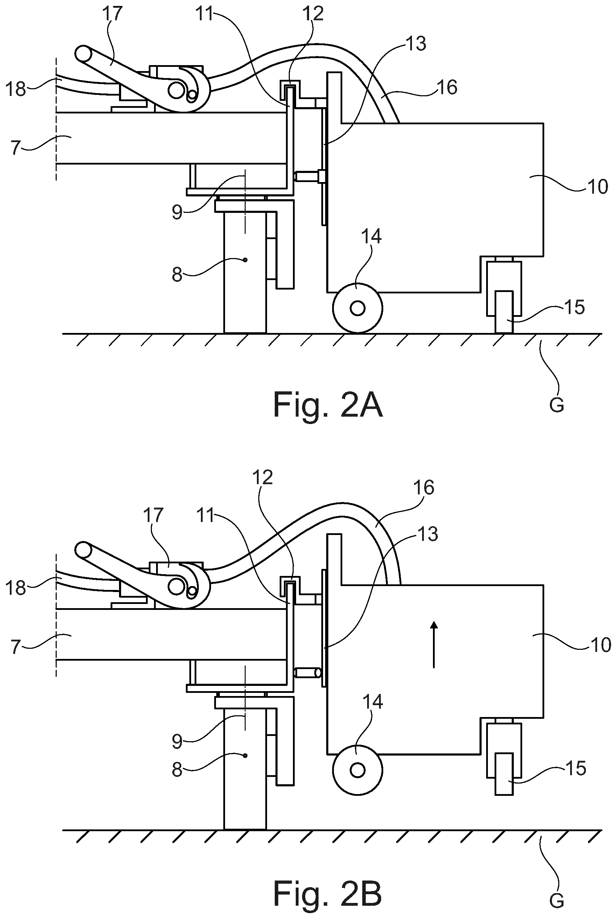

Device 3 has a gantry formed by a horizontal, drivable roller 4 onto which covering material can be wound. Provided on the other side of drivable roller 4 are uprights 5, 6 which are arranged on a horizontal frame part 7. Each of the horizontal frame parts 7 are in turn provided with drivable wheels 8 (see also figure 2) to enable the gantry to be moved along the relevant trench silo 1, 2.

As shown in figures 2A and 2B, the wheel 8 is rotatable around a vertical axis 9 so that the gantry can be steered. A carriage 10 is coupled to the horizontal frame part 7 via a mechanical coupling element 11, 12. This mechanical coupling 11, 12 is formed by an upright wall 11 arranged on the horizontal frame part 7 and a hook part 12, which is arranged on carriage 10.

The hook part 12 is guided along a guide 13, whereby carriage 10 can be adjusted in the height relative to mobile gantry 7, 8 (see figure 2B). This enables the wheels 14 and the swivel wheel 15 of carriage 10 to be lifted off the ground G so that carriage 10 is also lifted when gantry 7, 8 is displaced.

Carriage 10 is provided with an energy source, such as a hydraulic pump driven by an electric motor powered by a battery. The hydraulic oil is carried via a supply hose 16 to a rapid coupling 17 and via the rapid coupling 17 into feed hoses 18, which lead inter alia to hydraulic motors in wheels 8. Further provided in carriage 10 is a control whereby the different components of a gantry 7, 8 can be controlled.

When carriage 10 must be used for a different gantry 7, 8, carriage 10 is lowered relative to gantry 7, 8 so that wheels 14 and swivel wheel 15 are once again on the ground G. Hook part 12 is then moved to a position above upright wall 11, whereby carriage 10 can be pushed away in simple manner.

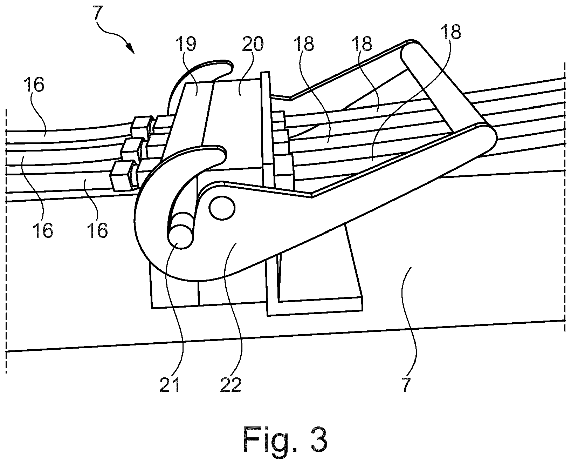

Figure 3 shows the rapid coupling 17 consisting of two coupling parts 19, 20. These two coupling parts 19, 20 are locked to each other by a protrusion 21 and lever 22. With this rapid coupling 17 the supply hoses 16 and feed hoses 18 can be coupled to each other in reliable and rapid manner.

## Claims

1. Device (3) for arranging and removing a strip of covering material, such as film or cloth, on a trench silo (1, 2), which device (3) comprises:
- a mobile gantry (7, 8) with means for holding a roller (4) with covering material and at least one motor for driving the mobile gantry (7, 8) in order to move the gantry (7, 8) along the trench silo (1, 2);
**characterized by**
- a carriage (10) arranged on the mobile gantry (7, 8) with a mechanical coupling (11, 12);
- an energy source, such as a generator, battery or hydraulic pump, arranged on the carriage (10); and
- a rapid coupling (17) for coupling the energy source to the at least one motor.

2. Device (3) according to claim 1, wherein the rapid coupling (17) comprises a first coupling part (19) arranged on the mobile gantry (7, 8) and a second coupling part (20) arranged on the carriage (10).

3. Device (3) according to claim 2, wherein one of the first coupling part (19) and the second coupling part (20) has at least one male connector and wherein the other of the first coupling part (19) and the second coupling part (20) has a corresponding number of female connectors.

4. Device (3) according to claim 2 or 3, wherein the first coupling part (19) and the second coupling part (20) comprise hydraulic rapid couplings.

5. Device (3) according to any one of the foregoing claims, wherein the mechanical coupling (11, 12) comprises at least one upright edge (11), arranged on the mobile gantry (7, 8), and a hook part (12), arranged on the carriage (10), engaging therearound.

6. Device (3) according to any one of the foregoing claims, further comprising lifting means for lifting at least a part of the carriage (10) relative to the mobile gantry (7, 8) .

7. Device (3) according to claim 6, wherein the lifting means comprise an actuator, such as a hydraulic cylinder, which actuator is arranged between the mechanical coupling (11, 12) and the carriage (10).

## Patentansprüche

1. Vorrichtung (3) zum Anordnen und Entfernen eines Streifens Abdeckmaterial, wie etwa Folie oder Stoff, auf einem Grabensilo (1, 2), wobei die Vorrichtung (3) umfasst:
- ein mobiles Portal (7, 8) mit Mitteln zum Halten einer Rolle (4) mit Abdeckmaterial und mindestens einem Motor zum Antreiben des mobilen Portals (7, 8), um das Portal (7, 8) entlang des Grabensilos (1, 2) zu verfahren;
**gekennzeichnet durch**
- einen Wagen (10), der an dem mobilen Portal (7, 8) mit einer mechanischen Kopplung (11, 12) angeordnet ist;
- eine Energiequelle, wie etwa einen Generator, eine Batterie oder eine Hydraulikpumpe, die an dem Wagen (10) angeordnet ist; und
- eine Schnellkopplung (17) zum Koppeln der Energiequelle mit dem mindestens einen Motor.

2. Vorrichtung (3) nach Anspruch 1, wobei die Schnellkopplung (17) ein erstes Kopplungsteil (19), das an dem mobilen Portal (7, 8) angeordnet ist, und ein zweites Kopplungsteil (20) umfasst, das an dem Wagen (10) angeordnet ist.

3. Vorrichtung (3) nach Anspruch 2, wobei eines des ersten Kopplungsteils (19) und des zweiten Kopplungsteils (20) mindestens einen männlichen Verbinder aufweist und wobei das andere des ersten Kopplungsteils (19) und des zweiten Kopplungsteils (20) eine entsprechende Anzahl von weiblichen Verbindern aufweist.

4. Vorrichtung (3) nach Anspruch 2 oder 3, wobei das erste Kopplungsteil (19) und das zweite Kopplungsteil (20) hydraulische Schnellkopplungen umfassen.

5. Vorrichtung (3) nach einem der vorstehenden Ansprüche, wobei die mechanische Kopplung (11, 12) mindestens eine aufrechte Kante (11), die an dem beweglichen Portal (7, 8) angeordnet ist, und ein diese umgreifendes Hakenteil (12) umfasst, das an dem Wagen (10) angeordnet ist.

6. Vorrichtung (3) nach einem der vorstehenden Ansprüche, die weiter Hebemittel zum Anheben mindestens eines Teils des Wagens (10) relativ zu dem mobilen Portal (7, 8) umfasst.

7. Vorrichtung (3) nach Anspruch 6, wobei die Hebemittel eine Betätigungsvorrichtung, wie etwa einen Hydraulikzylinder, umfassen, wobei die Betätigungsvorrichtung zwischen der mechanischen Kopplung (11, 12) und dem Wagen (10) angeordnet ist.

## Revendications

1. Dispositif (3) pour disposer et retirer une bande de matériau de couverture, tel qu'un film ou un tissu, sur un silo à tranchées (1, 2), lequel dispositif (3) comprend :
- un portique mobile (7, 8) avec des moyens de maintien d'un rouleau (4) avec matériau de couverture et au moins un moteur pour entraîner le portique mobile (7, 8) afin de déplacer le portique (7, 8) le long du silo à tranchées (1, 2) ;
**caractérisé par**
- un chariot (10) disposé sur le portique mobile (7, 8) avec un couplage mécanique (11, 12) ;
- une source d'énergie, telle qu'un générateur, une batterie ou une pompe hydraulique, disposée sur le chariot (10) ; et
- un couplage rapide (17) pour coupler la source d'énergie au au moins un moteur.

2. Dispositif (3) selon la revendication 1, dans lequel le couplage rapide (17) comprend une première partie de couplage (19) disposée sur le portique mobile (7, 8) et une seconde partie de couplage (20) disposée sur le chariot (10).

3. Dispositif (3) selon la revendication 2, dans lequel l'une de la première partie de couplage (19) et de la seconde partie de couplage (20) présente au moins un connecteur mâle et dans lequel l'autre de la première partie de couplage (19) et de la seconde partie de couplage (20) présente un nombre correspondant de connecteurs femelles.

4. Dispositif (3) selon la revendication 2 ou 3, dans lequel la première partie de couplage (19) et la seconde partie de couplage (20) comprennent des couplages rapides hydrauliques.

5. Dispositif (3) selon l'une quelconque des revendications précédentes, dans lequel le couplage mécanique (11, 12) comprend au moins un bord vertical (11), disposé sur le portique mobile (7, 8), et une partie en crochet (12), disposée sur le chariot (10), venant en prise autour de celui-ci.

6. Dispositif (3) selon l'une quelconque des revendications précédentes, comprenant en outre des moyens de levage pour soulever au moins une partie du chariot (10) par rapport au portique mobile (7, 8).

7. Dispositif (3) selon la revendication 6, dans lequel les moyens de levage comprennent un actionneur, tel qu'un vérin hydraulique, lequel actionneur est disposé entre le couplage mécanique (11, 12) et le chariot (10).
